# EUROPÄISCHE PATENTSCHRIFT

(11) **EP 2 435 354 B1**
(45) Veröffentlichungstag und Bekanntmachung des Hinweises auf die Patenterteilung: **24.07.2013**
(21) Anmeldenummer: 10721776.2
(22) Anmeldetag: 18.05.2010
(51) Int. Cl.: B81B 3/00

(54) **MIKROMECHANISCHES BAUTEIL UND HERSTELLUNGSVERFAHREN FÜR EIN MIKROMECHANISCHES BAUTEIL**
MICROMECHANICAL COMPONENT AND METHOD FOR THE PRODUCTION THEREOF
COMPOSANT MICROMÉCANIQUE ET PROCÉDÉ DE PRODUCTION D'UN COMPOSANT MICROMÉCANIQUE

(30) Priorität: 27.05.2009 DE 102009026506
(43) Veröffentlichungstag der Anmeldung: 04.04.2012
(73) Patentinhaber: Robert Bosch GmbH, 70442 Stuttgart (DE)
(72) Erfinder: NJIKAM NJIMONZIE, Frederic, 72762 Reutlingen (DE); SCHOCK, Wolfram, 72768 Rommelsbach (DE); MUCHOW, Joerg, 72764 Reutlingen (DE); LESTYAN, Zoltan, H-1139 Budapest (HU)
(86) Internationale Anmeldenummer: PCT/EP2010/056806
(87) Internationale Veröffentlichungsnummer: WO 2010/136356

(56) Entgegenhaltungen:
- JP-A- 2004 245 890
- JP-A- 2006 195 290
- JP-A- 2007 307 662
- CHI ZHANG, GAOFEI ZHANG, ZHENG YOU: "A Two-Dimensional Micro Scanner Integrated with a Piezoelectric Actuator and Piezoresistors", SENSORS, Bd. 9, 23. Januar 2009 (2009-01-23), Seiten 631-644, XP002620220, Basel, Switzerland ISSN: 1424-8220
- TARIK BOUROUINA ET AL: "Integration of Two Degree-of-Freedom Magnetostrictive Actuation and Piezoresistive Detection: Application to a Two-Dimensional Optical Scanner", JOURNAL OF MICROELECTROMECHANICAL SYSTEMS, IEEE SERVICE CENTER, PISCATAWAY, NJ, US, Bd. 11, Nr. 3, 1. Juni 2002 (2002-06-01), Seiten 355-361, XP011064770, ISSN: 1057-7157
- SASAKI M ET AL: "Piezoresistive rotation angle sensor integrated in micromirror", JAPANESE JOURNAL OF APPLIED PHYSICS, JAPAN SOCIETY OF APPLIED PHYSICS, JP, Bd. 45, Nr. 4B, 1. April 2006 (2006-04-01) , Seiten 3789-3793, XP002481610, ISSN: 0021-4922, DOI: DOI:10.1143/JJAP.45.3789

## Beschreibung

Die Erfindung betrifft ein mikromechanisches Bauteil gemäß dem Oberbegriff des Anspruchs 1. Des Weiteren betrifft die Erfindung ein Herstellungsverfahren für ein mikromechanisches Bauteil.

Ein mikromechanisches Bauteil weist häufig ein in Bezug auf eine Halterung des mikromechanischen Bauteils verstellbares Element auf. Zusätzlich kann das mikromechanische Bauteil eine Auswerteeinrichtung aufweisen, welche dazu ausgelegt ist, eine Information bezüglich einer aktuellen Stellung des verstellbaren Elements in Bezug auf die Halterung festzulegen.

Eine herkömmliche Auswerteeinrichtung umfasst beispielweise einen optischen Sensor, welcher eine Lichtquelle zum Emittieren eines auf eine reflektierende Oberfläche des verstellbaren Elements gerichteten Lichtstrahls und einen Detektor zum Ermitteln eines Auftreffpunkts des an der reflektierenden Oberfläche reflektierten Lichtstrahls umfasst. Ein derartiger optischer Sensor ist jedoch vergleichsweise teuer und benötigt relativ viel Bauraum. Des Weiteren ist das Auswerteverfahren zum Auswerten der von dem optischen Sensor bereitgestellten Werte vergleichsweise umständlich.

Als Alternative zu dem optischen Sensor kann die Auswerteeinrichtung auch einen kapazitiven Sensor aufweisen. In diesem Fall umfasst das verstellbare Element eine erste Elektrode. Eine Kapazität zwischen der ersten Elektrode und einer an der Halterung fest angeordneten zweiten Elektrode erlaubt Rückschlüsse auf die aktuelle Stellung des verstellbaren Elements in Bezug auf die Halterung. Allerdings erfordert eine Auswerteeinrichtung mit einem derartigen kapazitiven Sensor eine aufwändige Elektronik zum Herausfiltern von Störsignalen. Des Weiteren können angelegte Spannungen eines elektrischen Antriebs zum Verstellen des verstellbaren Elements in Bezug auf die Halterung zu Messfehlern des kapazitiven Sensors führen.

Aus dem Stand der Technik sind außerdem Messverfahren bekannt, bei welchen eine Feder, über welche das verstellbare Element mit der Halterung verbunden ist, mit einem piezo-resistiven Sensorelement ausgestattet wird. Häufig bewirkt ein Verstellen des verstellbaren Elements in Bezug auf die Halterung in diesem Fall mechanische Spannungen auf das piezo-resistive Element. Ein von dem piezo-resistiven Sensorelement bereitgestelltes Sensorsignal wird durch die mechanischen Spannungen verändert.

Ein Ausführen eines derartigen Messverfahrens erfordert jedoch eine elektrische Anbindung des auf oder in der Feder angeordneten piezo-resistiven Sensorelements mittels elektrischer Versorgungs- und/oder Detektionsleitungen. Dies führt insbesondere bei der Verwendung von mindestens zwei piezo-resistiven Sensorelementen zum Ermitteln einer Veränderung der aktuellen Stellung des verstellbaren Elements in mindestens zwei Raumrichtungen häufig zu Problemen. Gemäß dem Stand der Technik werden bei einem derartigen Messverfahren ein erstes piezo-resistives Sensorelement auf oder in einer ersten Feder und ein zweites piezo-resistives Sensorelement auf oder in einer zweiten Feder angeordnet. In der Regel wird die erste Feder bei einem Verstellen des verstellbaren Elements um eine erste Drehachse tordiert. Entsprechend wird die zweite Feder tordiert, sobald das verstellbare Element in Bezug auf die Halterung um eine zweite Drehachse verstellt wird.

Sofern die erste Feder als äußere Feder und die zweite Feder als innere Feder ausgebildet sind, müssen die Versorgungs- und/oder Detektionsleitungen des zweiten piezo-resistiven Sensorelements jedoch über die erste Feder geführt werden. Dies ist insbesondere bei schmalen Federn mit einer Breite von unter 50 µm kaum ausführbar. Zusätzlich können die Versorgungs- und/oder Detektionsleitungen des zweiten piezo-resistiven Sensorelements, insbesondere wenn sie aus Aluminium sind, bei einem Biegen der ersten Feder beschädigt werden. Des Weiteren reduzieren die über die erste Feder geführten Versorgungs- und/oder Detektionsleitungen des zweiten piezo-resistiven Sensorelements in der Regel die Verstellbarkeit des verstellbaren Elements um die erste Drehachse.

Die Druckschrift Zhang, C., Zhang, G., Zheng Y.: "A Two-Dimensional Micro Scanner Integrated with a Piezoelectric Actuator and Piezoresistors", Sensors, Vol. 9, 23. Januar 2009, S. 631-644 offenbart einen zweidimensionalen Mikroscanner mit einer Federaufhängung und in der Federaufhängung integrierten Piezowiderständen.

Die Druckschrift Bourouina, T., Lebrasseur, E.,Reyne, G., Debray, G., Fujita, H., Ludwig, A., Quandt, E., Muro, H., Oki, T., Asaoka, A.: "Integration of two degreeof-freedom magnetostrictive actuation and piezoresistive detection: application to a two-dimensional optical scanner", Journal of Microelectromechanical Systems, IEEE Service Center, Piscataway, U.S., Bd. 11, Nr. 3, 1. Juni 2002, S. 355-361 offenbart eine zweidimensional optische Scanneranordnung mit einem magnetostriktiven Film zur Ermittlung von Torsions- und Biegebewegungen.

### Offenbarung der Erfindung

Die Erfindung schafft ein mikromechanisches Bauteil mit den Merkmalen des Anspruchs 1 und ein Herstellungsverfahren für ein mikromechanisches Bauteil mit den Merkmalen des Anspruchs 8.

Unter dem ersten Verankerungsbereich der Feder und/oder dem zweiten Verankerungsbereich der Feder sind beispielsweise ein Bereich der Halterung und/oder ein Bereich des verstellbaren Elements zu verstehen, welche die Feder kontaktieren, bzw. an die Feder angrenzen. Bevorzugterweise ist die Feder über den ersten Verankerungsbereich so mit zumindest einer Untereinheit der Halterung und über den zweiten Verankerungsbereich so mit zumindest einer Untereinheit des verstellbaren Elements verbunden, dass bei einer Torsion oder einem Biegen der Feder mechanische Spannungen in mindestens einem Verankerungsbereich auftreten.

Durch das Anordnen des ersten piezo-resistiven Sensorelements und des zweiten piezo-resistiven Sensorelements auf oder in der gemeinsamen Feder oder mindestens einem Verankerungsbereich ist es beispielsweise möglich, mindestens eine gemeinsame Leitung des ersten piezo-resistiven Sensorelements und des zweiten piezo-resistiven Sensorelements auszubilden. Unter einer gemeinsamen Leitung ist eine Leitung zu verstehen, welche das erste piezo-resistiven Sensorelement und das zweite piezo-resistiven Sensorelement kontaktiert. Auf diese Weise ist die Anzahl der für die elektrische Anbindung der beiden piezo-resistiven Sensorelemente notwendigen Leitungen bei einem Anordnen der beiden piezo-resistiven Sensorelemente auf einer gemeinsamen Feder reduzierbar. Durch die reduzierte Anzahl von notwendigen Leitungen ist eine bessere Verstellbarkeit des verstellbaren Elements in Bezug auf die Halterung gewährleistet.

Das erste und das zweite piezo-resistive Sensorelement sind auf oder in derselben Feder angeordnet.

Bei einer Torsion oder einem Biegen der Feder werden relativ große mechanische Spannungen auf mindestens eines der beiden Sensorelemente ausgeübt.

Vorzugsweise sind die beiden Sensoreinrichtungen so ausgelegt, dass die erste Sensoreinrichtung keine auf das zweite Sensorelement wirkende erste mechanische Spannung und die zweite Sensoreinrichtung keine auf das erste Sensorelement wirkende mechanische Spannung erfasst/festlegt.

Insbesondere kann die Feder mit den beiden piezo-resistiven Sensorelementen als Außenfeder ausgebildet sein. In diesem Fall ist die Feder mit den beiden piezo-resistiven Sensorelementen für einen direkten Kontakt mit der Halterung ausgelegt. Damit entfallen auch die Probleme welche herkömmlicherweise beim Führen von Leitungen über mindestens eine Feder auftreten. Insbesondere ist das Risiko einer Beschädigung einer über eine Feder geführten Leitung verhindert.

Darüber hinaus ist es für bestimmte Varianten erforderlich, zwei Potenziale (ein Massepotenzial und ein variables Signal in einem Bereich von mehreren 100 V) für die eigentliche Ansteuerung über eine Außenfeder zu führen. Eine solch hohe Spannung kann das Selektionssignal herkömmlicherweise stören. Vorzugsweise erfolgt die Detektion deshalb auf einer Außenfeder.

Die in den oberen Absätzen beschriebenen Vorteile des mikromechanischen Bauteils sind auch bei einem entsprechenden Herstellungsverfahren für ein mikromechanisches Bauteil gewährleistet.

### Kurze Beschreibung der Zeichnungen

Weitere Merkmale und Vorteile der vorliegenden Erfindung werden nachfolgend anhand der Figuren erläutert. Es zeigen:
- Fig. 1: einen Querschnitt durch eine erste Ausführungsform des mikromechanischen Bauteils;
- Fig. 2: eine Feder einer zweiten Ausführungsform des mikromechanischen Bauteils;
- Fig. 3A bis 3C: Koordinatensysteme zum Darstellen von Anordnungsmöglichkeiten für ein piezo-resistives Sensorelement des mikromechanischen Bauteils;
- Fig. 4: eine Feder eines mikromechanischen Bauteils;
- Fig. 5: eine Feder eines mikromechanischen Bauteils;
- Fig. 6: eine Feder einer Ausführungsform des mikromechanischen Bauteils; und
- Fig. 7: eine Feder eines mikromechanischen Bauteils.

### Ausführungsformen der Erfindung

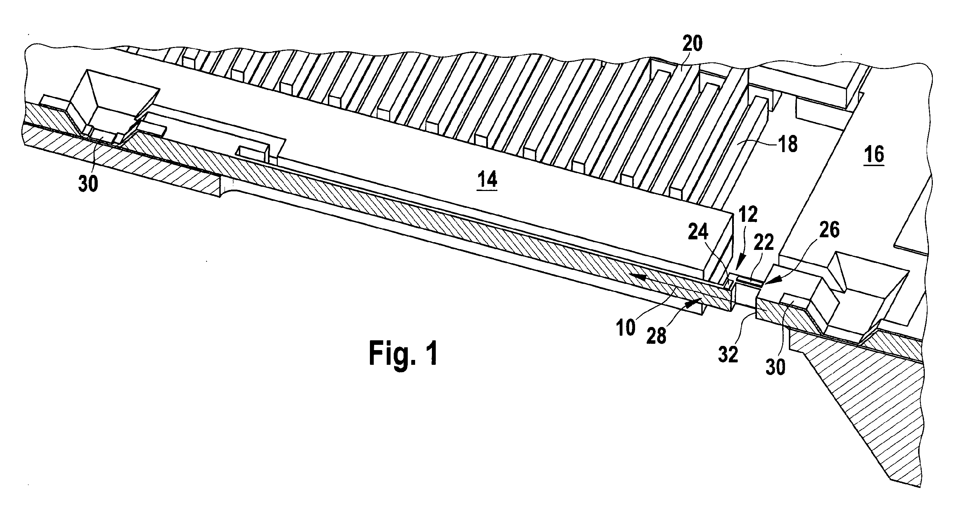

Fig. 1 zeigt einen Querschnitt durch eine erste Ausführungsform des mikromechanischen Bauteils.

Der dargestellte Querschnitt durch das mikromechanische Bauteil verläuft entlang einer Längsachse 10 einer Feder 12, über welche ein verstellbares Element 14 mit einer Halterung 16 des mikromechanischen Bauteils verbunden ist. Die Feder 12 kann aus einem einkristallinen Siliziummaterial herausstrukturiert sein. Ein bevorzugtes Material für die Feder 12 ist Silizium. Vorzugsweise verläuft die Längsachse 10 der Feder 12 entlang der 110-Kristallrichtung des einkristallinen Siliziummaterials. Wie weiter unten noch genauer erläutert wird, erleichtert eine derartige Feder 12 die Implementierung einer Wheatstonebrücke und/oder eines x-ducers. Vor allem ist in diesem Fall eine vorteilhafte Ausrichtung des piezo-resistiven Sensorelements der Wheatstonebrücke oder des x-ducers leicht ausführbar. Insbesondere kann die Feder 12 einstückig mit mindestens einer Untereinheit der Halterung 16 und/oder des verstellbaren Elements 14 ausgebildet sein.

Bei dem dargestellten Ausführungsbeispiel weist ein zu der Halterung 16 benachbarter erster Endabschnitt der Feder 12 eine durchgehende Aussparung auf, welche die Feder 12 in einen ersten Schenkel, einen (nicht dargestellten) zweiten Schenkel und einen Verbindungssteg unterteilt. Auf die Vorteile einer derartigen Ausbildung der Feder 12 wird weiter unten ausführlicher eingegangen.

Das mikromechanische Bauteil kann zusätzlich zu der Feder 12 noch mindestens eine weitere Feder, die das verstellbare Element 14 mit einer Halterung 16 verbindet, umfassen. In einer vorteilhaften Ausführungsform kann die als Außenfeder ausgebildete Feder 12 die Halterung 16 mit mindestens einer als Innenfeder ausgebildeten weiteren Feder verbinden, während die mindestens eine Innenfeder zwischen der Feder 12 und dem verstellbaren Element 14 angeordnet ist. Zusätzlich zu der als Außenfeder ausgebildeten Feder 12 kann das mikromechanische Bauteil noch eine weitere Außenfeder umfassen. Die im Weiteren beschriebene erfindungsgemäße Technik stellt keine Anforderung an die mindestens eine weitere Feder. Deshalb ist die hier beschriebene Ausführungsform nicht auf die mindestens eine weitere Feder oder eine bestimmte Ausbildung der mindestens einen weiteren Feder beschränkt.

Das verstellbare Element 14 kann beispielsweise eine (nicht dargestellte) Spiegelplatte umfassen. Es wird jedoch darauf hingewiesen, dass das mikromechanische Bauteil nicht auf eine Ausbildung als Mikrospiegel beschränkt ist.

Bei der dargestellten Ausführungsform umfasst das mikromechanische Bauteil einen an dem verstellbaren Element 14 angeordneten Aktor-Elektrodenkamm 18 und einen fest mit der Halterung 16 verbundenen Stator-Elektrodenkamm 20. Die Elektrodenkämme 18 und 20 sind Untereinheiten eines elektrostatischen Antriebs, welcher dazu ausgelegt ist, das verstellbare Element 14 in Bezug auf die Halterung 16 zu verstellen. Das mikromechanische Bauteil ist allerdings nicht auf einen derartigen elektrostatischen Antrieb eingeschränkt. Als Alternative oder als Ergänzung zu den Elektrodenkämmen 18 und 20 kann das mikromechanische Bauteil mindestens eine weitere elektrische und/oder magnetische Antriebskomponente umfassen.

Vorzugsweise ist der Antrieb des mikromechanischen Bauteils dazu ausgelegt, das verstellbare Element 14 in Bezug auf die Halterung 16 um die Längsrichtung 10 der Feder 12 und um eine zu der Längsrichtung 10 nicht-parallel ausgerichtete Drehachse zu verstellen. Man kann in diesem Fall auch von einem zweiachsig aufgehängten verstellbaren Element 14 sprechen.

Das dargestellte mikromechanische Bauteil umfasst eine erste Sensoreinrichtung 22 mit einem (nicht skizzierten) ersten piezo-resistiven Sensorelement und eine zweite Sensoreinrichtung 24 mit einem (nicht dargestellten) zweiten piezo-resistiven Sensorelement. Das erste piezo-resistive Sensorelement und das zweite piezo-resistive Sensorelement sind auf oder in der Feder 12 angeordnet. Unter einer Anordnung der piezo-resistiven Sensorelemente auf oder in der Feder 12 werden beispielsweise Positionen der piezo-resistiven Sensorelemente verstanden, welche zwischen einer ersten Verbindungsfläche 26 der Feder 12 mit der Halterung 16 und einer zweiten Verbindungsfläche 28 der Feder 12 mit dem verstellbaren Element 14 liegen. Die Verbindungsflächen 26 und 28 können auch virtuelle Flächen, d.h. minimale Endabschnitte der Feder 12, und/oder Verankerungsbereiche der Feder 12 sein. Auf vorteilhafte Ausführungsbeispiele und Positionen für die piezo-resistiven Sensorelemente der Sensoreinrichtungen 22 und 24 wird weiter unten noch genauer eingegangen.

An dem mikromechanischen Bauteil können über Beschichtungen 30 und Dotierungen 32 Leitungen für eine elektrische Anbindung des Antriebs und/oder mindestens einer der Sensoreinrichtungen 22 und 24 ausgebildet werden. Da für einen Fachmann Verfahren zum Herstellen der Feder 12, des Antriebs mit den Elektrodenkämmen 18 und 20 und der Leitungen aus den Beschichtungen 30 und den Dotierungen 32 anhand der Fig. 1 nahegelegt sind, wird hier nicht darauf eingegangen.

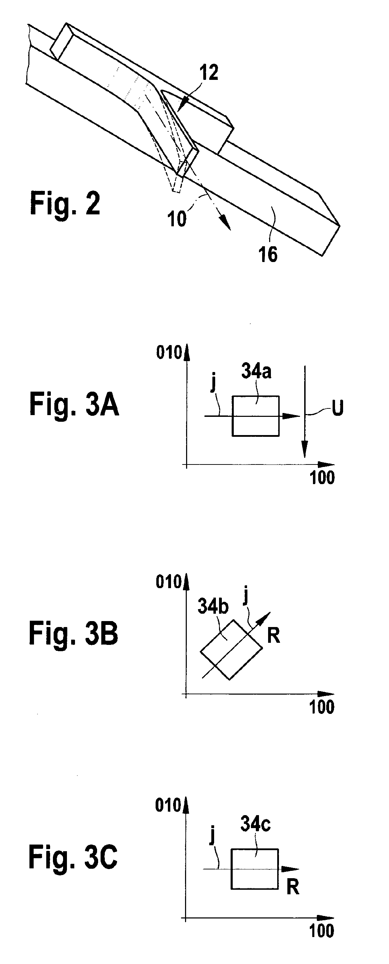

Fig. 2 zeigt eine Feder einer zweiten Ausführungsform des mikromechanischen Bauteils.

Wird auf die dargestellte Feder 12 keine Last aufgebracht, so liegt die Feder 12 in ihrer Ausgangsstellung (durchgezogene Linien) vor. Dies ist beispielsweise der Fall, wenn ein Antrieb zum Verstellen des verstellbaren Elements des mikromechanischen Bauteils nicht betrieben wird. In ihrer Ausgangsstellung verläuft die Feder 12 entlang ihrer Längsachse 10.

Über die dargestellte Feder 12 ist ein (nicht skizziertes) verstellbares Element mit der (nur teilweise dargestellten) Halterung 16 verstellbar verbunden. Vorzugsweise kann das verstellbare Element um die Längsachse 10 und eine zu der Längsachse 10 nicht-parallel ausgerichtete Drehachse verstellt werden. Vorteilhafterweise ist die Drehachse senkrecht zu der Längsachse 10 ausgerichtet. Eine Verstellbewegung des verstellbaren Elements Element um die Längsachse 10 und/oder die Drehachse bewirkt eine entsprechende Biegebewegung der Feder 12 (gestrichelte Linien).

Wird das verstellbare Element beispielsweise um die Längsachse 10 gedreht, so bewirkt dies eine Torsion der Feder 12 um die Längsachse 10. Unter einer Torsion der Feder 12 um die Längsachse 10 wird im Weiteren eine Verformung der Feder 12 verstanden, bei welcher ein dem verstellbaren Element zugewandter zweiter Endabschnitt der Feder 12 in Bezug zu einem der Halterung 16 benachbarten ersten Endabschnitt der Feder 12 um die Längsachse 10 gedreht wird. Bei einer derartigen Torsion der Feder 12 um die Längsachse 10 treten insbesondere in dem ersten Endabschnitt der Feder 12 mechanische Spannungen auf.

Ebenso bewirkt ein Verstellen des verstellbaren Elements um die zu der Längsachse 10 nicht-parallel ausgerichtete Drehachse eine Verformung der Feder 12, welche im Weiteren als Verbiegen der Feder 12 um die Drehachse bezeichnet wird. Bei einem Verbiegen der Feder 12 um die Drehachse wird der zweite Endabschnitt in Bezug auf den ersten Endabschnitt um die Drehachse verstellt. Auch bei einem derartigen Verbiegen der Feder 12 treten mechanische Spannungen in dem ersten Endabschnitt auf.

Wie weiter unten noch genauer beschrieben wird, umfasst das mikromechanische Bauteil zwei (nicht dargestellte) Sensoreinrichtungen mit je mindestens einem piezo-resistiven Sensorelement. Die mindestens zwei piezo-resistiven Sensorelemente sind so auf oder in der Feder 12 angeordnet, dass die bei der Torsion der Feder 12 um die Längsachse 10 und/oder bei dem Verbiegen der Feder 12 um die Drehachse auftretenden mechanischen Spannungen auf mindestens ein piezo-resistives Sensorelement wirken. Jede der Sensoreinrichtungen ist dazu ausgelegt, bei einer mechanischen Spannung auf das zugeordnete piezo-resistive Sensorelement ein entsprechendes Sensorsignal an eine (nicht dargestellte) Auswerteeinrichtung des mikromechanischen Bauteils bereitzustellen. Die von den Sensoreinrichtungen bereitgestellten Sensorsignale können Spannungen, Spannungsänderungen, Widerstände und/oder Widerstandsänderungen umfassen.

Die Auswerteeinrichtung ist dazu ausgelegt, unter Berücksichtigung der bereitgestellten Sensorsignale eine erste Information bezüglich einer ersten Verstell- und/oder Biegebewegung des verstellbaren Elements und/oder der Feder 12 um die Längsachse 10 und eine zweite Information bezüglich einer zweiten Verstell- und/oder Biegebewegung des verstellbaren Elements und/oder der Feder 12 um die Drehachse festzulegen. Die erste Information und/oder die zweite Information können beispielsweise einen ersten Verstellwinkel, um welchen das verstellbare Element und/oder die Feder 12 um die Längsachse 10 verstellt wird, und/oder einen zweiten Verstellwinkel, um welchen das verstellbare Element und/oder die Feder 12 um die Drehachse gedreht wird, umfassen. Als Alternative oder als Ergänzung zu einem Verstellwinkel können die ersten Information und/oder die zweite Information auch mindestens eine weitere die aktuelle Stellung und/oder eine Änderung der aktuellen Stellung des verstellbaren Elements in Bezug auf die Halterung beschreibenden Größe umfassen. Auf besonders vorteilhafte Ausführungsformen und Positionen eines piezo-resistiven Sensorelements und Ausbildungen der Auswerteeinrichtung wird nachfolgend genauer eingegangen.

Es wird hier darauf hingewiesen, dass es ausreichend ist, die mindestens zwei piezo-resistiven Sensorelemente der zwei Sensoreinrichtungen auf oder in einer einzigen Feder 12 anzuordnen, um die Informationen bezüglich der Verstell- und/oder Biegebewegungen des verstellbaren Elements und/oder der Feder 12 um zwei zueinander nicht-parallele Achsen zu ermitteln oder festzulegen. Auf die Vorteile dieser Anordnung der mindestens zwei piezo-resistiven Sensorelemente der zwei Sensoreinrichtungen auf oder in der Feder 12 ohne das Verwenden einer weiteren Feder zum Anordnung der mindestens zwei piezo-resistiven Sensorelemente wird unten noch ausführlich eingegangen.

Fig. 3A bis 3C zeigen Koordinatensysteme zum Darstellen von Anordnungsmöglichkeiten für ein piezo-resistives Sensorelement des mikromechanischen Bauteils. Die Abszisse der dargestellten Koordinatensysteme entspricht einer 100-Kristallrichtung eines einkristallinen Siliziums. Die Ordinate gibt die 010-Kristallrichtung des einkristallinen Siliziums wieder.

Das in Fig. 3A schematisch wiedergegebene piezo-resistive Sensorelement ist ein p-dotierter Piezo 34a einer als x-ducer ausgebildeten Sensoreinrichtung. Das als p-dotierter Piezo 34a ausgebildete Sensorelement ist in einem einkristallinen Silizium ausgebildet. Da Verfahren zum Herstellen eines x-ducers mit einem p-dotierten Piezo 34a in einer einkristallinen Siliziumschicht dem Fachmann bekannt sind, wird nicht weiter darauf eingegangen.

Ein x-ducer ist so ausgebildet, dass mechanische Spannungen auf den p-dotierten Piezo 34a eine Spannungsänderung bewirken. Wird ein Strom j durch den p-dotierten Piezo 34a geleitet, so kann die Spannungsänderung über ein Abgreifen einer Spannung U an dem p-dotierten Piezo 34a ermittelt werden. Eine maximale Spannungsänderung liegt vor, wenn der p-dotierte Piezo 34a in der 100-Kristallrichtung einer einkristallinen Siliziumschicht liegt und die mechanische Spannung, welche auf den p-dotierten Piezo 34a einwirken, parallel oder senkrecht zu der 100-Kristallrichtung der einkristallinen Siliziumschicht ausgerichtet sind.

Für eine verlässliche Funktionsweise der Sensoreinrichtung ist der p-dotierte Piezo 34a deshalb entlang der 100-Kristallrichtung ausgerichtet. Bei einer derartigen Ausrichtung des p-dotierten Piezos 34a wird der Strom j vorzugsweise entlang der 100-Kristallrichtung durch den p-dotierten Piezo 34a geleitet. Senkrecht zu dem Strom j wird die Spannung U an dem p-dotierten Piezo 34a abgegriffen.

Fig. 3B gibt eine bevorzugte Ausrichtung eines p-dotierten Widerstands 34b, einer Halbbrücke und/oder einer als Wheatstonebrücke ausgebildeten Sensoreinrichtung wieder. Eine Wheatstonebrücke kann vier als piezo-resistive Sensorelemente ausgebildete p-dotierte Widerstände 34b umfassen.

Bevorzugterweise ist ein p-dotierter Widerstand 34b der Wheatstonebrücke so in ein einkristallines Silizium eingebettet, dass der p-dotierte Widerstand 34b entlang der 110-Kristallrichtung des einkristallinen Siliziums ausgerichtet ist und ein Strom j entlang der 110-Kristallrichtung durch den p-dotierten Widerstand 34b geleitet wird. Als Sensorsignal der Wheatstonebrücke wird ein Widerstand R/eine Widerstandsänderung an den vier p-dotierten Widerständen 34b abgegriffen. Vorteilhafterweise erfolgt das Abgreifen des Widerstands R/der Widerstandsänderung senkrecht zu der Ausrichtung mindestens eines p-dotierten Widerstands 34b.

Die anhand der Fig. 3C dargestellte Sensoreinrichtung umfasst einen Widerstand, eine Halbbrücke und/oder als Wheatstonebrücke verschaltete vier n-dotierte Widerstände 34c. Eine maximale Widerstandsänderung liegt bei einer derartigen Wheatstonebrücke vor, wenn die vier n-dotierten Widerstände 34c in der 100-Kristallrichtung eines einkristallinen Siliziums ausgerichtet sind und die mechanische Spannung parallel oder senkrecht zu der 100-Kristallrichtung auf die vier n-dotierten Widerstände 34c einwirkt.

Die Wheatstonebrücke ist deshalb auf oder in einem einkristallinen Silizium so angeordnet, dass mindestens einer der n-dotierten Widerstände 34c entlang der 100-Kristallrichtung ausgerichtet ist und ein Strom j entlang der 100-Kristallrichtung durch den n-dotierten Widerstand 34c geleitet wird. Auch in diesem Fall kann ein Widerstand R/eine Widerstandsänderung an den n-dotierten Widerständen 34c gemessen werden. Durch eine derartige vorteilhafte Ausrichtung der n-dotierten Widerstände 34c bewirken die auf die n-dotierten Widerstände 34c ausgeübten mechanischen Spannungen eine maximale Widerstandsänderung. Vorzugsweise wird der Widerstand R/die Widerstandsänderung senkrecht zu dem Strom j an den n-dotierten Widerständen 34c gemessen.

Eine Sensoreinrichtung 22 oder 24 mit mindestens einem p-dotierten Piezo 34a und/oder eine Wheatstonebrücke mit vier Widerständen 34b oder 34c ist kostengünstig und vergleichweise leicht herstellbar. Weitere vorteilhafte Beispiele zum Anordnen mindestens eines p-dotierten Piezos 34a, eines p-dotierten Widerstands 34b und/oder eines n-dotierten Widerstands 34c auf einer Feder 12 eines mikromechanischen Bauteils werden unten genauer ausgeführt.

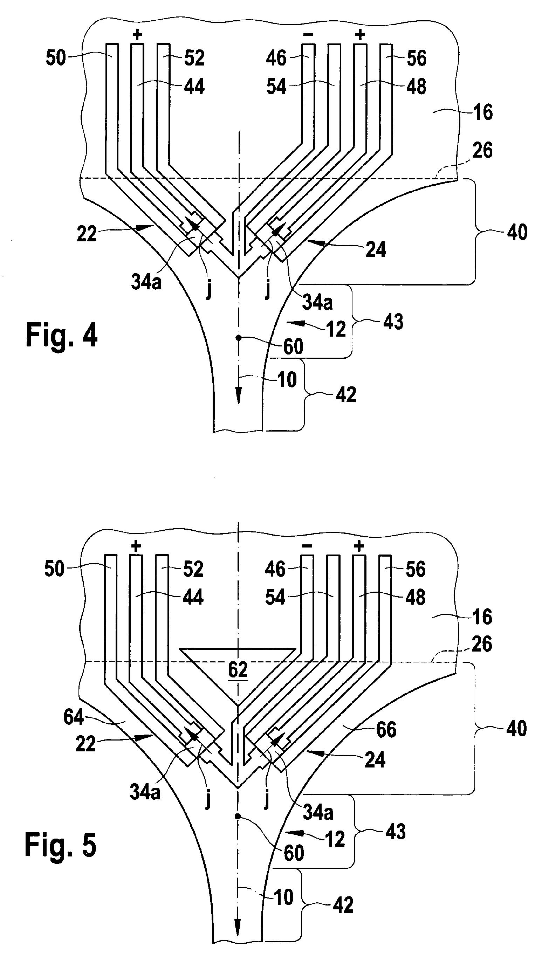

Fig. 4 zeigt eine Feder des mikromechanischen Bauteills nützlich zum Verständnis der Erfindung.

Die dargestellte Feder 12 ist so aus einem einkristallinen Silizium herausstrukturiert, dass eine Längsrichtung 10 der Feder 12 (in der Ausgangsstellung) entlang einer 110-Kristallrichtung des einkristallinen Siliziums verläuft. Über die Feder 12 ist ein (nicht skizziertes) verstellbares Element mit einer Halterung 16 verbunden.

Eine mittlere Breite der Feder 12 kann unter 50 µm liegen. Beispielsweise liegt die mittlere Breite der Feder 12 zwischen 10 und 30 µm. Ein erster Endabschnitt 40 der Feder 12, welcher benachbart zu der Halterung 16 angeordnet ist, weist eine maximale Breite auf, welche größer als eine maximale Breite eines zu dem verstellbaren Element ausgerichteten zweiten Endabschnitts 42 ist. Ebenso ist die maximale Breite des ersten Endabschnitts 40 größer als eine maximale Breite eines Zwischenabschnitts 43 der Feder 12, welcher von dem ersten Endabschnitt 40 zu dem zweiten Endabschnitt 42 verläuft. Man kann dies auch als eine Verbreiterung des ersten Endabschnitts 40 im Vergleich mit dem zweiten Endabschnitt 42 und/oder dem Zwischenabschnitt 43 der Feder 12 bezeichnen.

Vorzugsweise nimmt die Breite des ersten Endabschnitts 40 entlang der Richtung von dem Zwischenabschnitt 43 zu der Halterung 16 stetig zu. Man kann dies auch massive V-förmige Federanbindung der Feder 12 an die Halterung 16 bezeichnen.

Auf oder in dem ersten Endabschnitt 40 sind ein erster p-dotierter Piezo 34a einer als x-ducer ausgebildeten ersten Sensoreinrichtung 22 und ein zweiter p-dotierter Piezo 34a einer als x-ducer ausgebildeten zweiten Sensoreinrichtung 24 angeordnet. Jeder der als Sensoreinrichtungen 22 und 24 fungierende x-ducer ist so ausgelegt, dass eine mechanische Spannung auf einen zugehörigen p-dotierten Piezo 34a, durch welchen ein Strom j geleitet wird, eine Änderung einer senkrecht zu dem Strom j ausgerichteten Spannung U bewirkt. Vorzugsweise wird die Änderung der Spannung U senkrecht zu dem Strom j gemessen.

Bei einer Längsachse 10 der Feder 12 entlang der 110-Kristallrichtung des einkristallinen Siliziums ist es vorteilhaft, den Strom j so durch die p-dotierten Piezos 34a zu leiten, dass der Strom j In einem Winkel von 45° zu der Längsachse 10 ausgerichtet ist. Der Strom j durch die p-dotierten Piezos 34a ist somit entlang der 100-Kristallrichtung ausgerichtet.

Eine derartige vorteilhafte Ausrichtung des Stroms j ist bei dem p-dotierten Piezo 34a der ersten Sensoreinrichtung 22 realisierbar, indem eine erste Stromversorgungsleitung 44 und eine zweite Stromversorgungsleitung 46 den p-dotierten Piezo 34a der ersten Sensoreinrichtung 22 so kontaktieren, dass der minimale Abstand zwischen den beiden Stromversorgungsleitungen 44 und 46 entlang der 100-Kristallrichtung verläuft. Zusätzlich können die zweite Stromversorgungsleitung 46 und eine dritte Stromversorgungsleitung 48 den p-dotierten Piezo 34a der zweiten Sensoreinrichtung 24 so kontaktieren, dass der kürzeste Abstand zwischen den beiden Stromversorgungsleitungen 46 und 48 entlang der 100-Kristallrichtung ausgerichtet ist. Durch eine geeignete Anbindung der Stromversorgungsleitungen 44 bis 48 an eine Stromquelle ist ein ausreichender Strom j durch die p-dotierten Piezos 34a der beiden Sensoreinrichtung 22 und 24 gewährleistet. Beispielsweise können die Stromversorgungsleitungen 44 und 48 an einen Pluspol und die Stromversorgungsleitung 46 an einen Minuspol der Stromquelle angeschlossen sein. Für einen Fachmann sind allerdings auch weitere mögliche Polungen der Stromversorgungsleiten 44 bis 48 durch Fig. 4 nahe gelegt.

Durch das Kontaktieren der zwei p-dotierten Piezos 34a der beiden Sensoreinrichtung 22 und 24 durch die gemeinsame zweite Stromversorgungsleitung 46 ist eine vergleichsweise geringe Anzahl von Stromversorgungsleitungen 44 bis 48 für die Stromversorgung der zwei p-dotierten Piezos 34a der beiden Sensoreinrichtung 22 und 24 realisierbar. Somit wird die Federsteifigkeit der Feder 12 mit den zwei p-dotierten Piezos 34a der beiden Sensoreinrichtung 22 und 24 nur in einem geringe Maße von den Stromversorgungsleitungen 44 bis 48 beeinflusst. Dies ist ein wesentlicher Vorteil der hier beschriebenen Feder gegenüber dem Stand der Technik, bei welchem das Anordnen der zwei p-dotierten Piezos 34a auf zwei Federn eine größere Anzahl von Stromversorgungsleitungen für die Stromversorgung der zwei p-dotierten Piezos 34a notwendig macht. Einkristallines Silizium weist eine hohe mechanische Stabilität auf, besitzt aber als Halbleiter einen relativ hohen Widerstand. Um diesen Widerstand gering zu halten, ist es zusätzlich vorteilhaft, eine möglichst geringe Anzahl von Stromversorgungsleitungen 44 bis 48 über die Feder 12 zu führen.

An dem p-dotierten Piezo 34a der ersten Sensoreinrichtung 22 sind zwei Spannungsabgreifleitungen 50 und 52 angeschlossen. Vorzugsweise ist die Lage der beiden Spannungsabgreifleitungen 50 und 52 so gewählt, dass ein minimaler Abstand zwischen den beiden Spannungsabgreifleitungen 50 und 52 entlang der 010-Kristallrichtung des einkristallinen Siliziums ausgerichtet ist. Entsprechend können zwei Spannungsabgreifleitungen 54 und 56 den p-dotierten Piezo 34a der zweiten Sensoreinrichtung 24 so kontaktieren, dass ein minimaler Abstand zwischen den beiden Spannungsabgreifleitungen 54 und 56 ebenfalls entlang der 010-Kristallrichtung verläuft. Die zum Abgreifen der Spannung U ausgebildeten Spannungsabgreifleitungen 50 bis 56 sind somit so ausgebildet, dass das Abgreifen der Spannung U entlang der 010-Kristallrichtung erfolgt. Dies gewährleistet ein optimales Verwenden der beiden p-dotierten Piezos 34a der zwei Sensoreinrichtungen 22 und 24 zum Ermitteln von mechanischen Spannungen, welche auf die beiden p-dotierten Piezos 34a der zwei Sensoreinrichtungen 22 und 24 wirken, bzw. zum Festlegen der Informationen bezüglich der Verstell- und/oder Biegebewegungen des verstellbaren Elements und/oder der Feder 12 über die im Weiteren beschriebene Vorgehensweise.

Bei einer V-förmigen Ausbildung des ersten Endabschnitts 40 ist eine ausreichende Anbringfläche für die zwei p-dotierten Piezos 34a der zwei Sensoreinrichtungen 22 und 24 und die Leitungen 44 bis 56 gewährleistet. Da die Leitungen 44 bis 56 nicht über dem ersten Endabschnitt 40 hinaus entlang der Feder 12 geführt werden, beeinträchtigen sie die Federsteifigkeit der Feder 12 kaum.

Die zwei p-dotierten Piezos 34a der zwei Sensoreinrichtungen 22 und 24 können einen gleichen Abstand zu einer (virtuellen) Verbindungsfläche 26 zwischen der Feder 12 und der Halterung 16 aufweisen. Ebenso können die zwei p-dotierten Piezos 34a der zwei Sensoreinrichtungen 22 und 24 einen gleichen Abstand zu einem, vorzugsweise auf der Längsachse 10 liegenden Mittelpunkt 60 haben. Bei einer derartigen Anordnung der zwei p-dotierten Piezos 34a der zwei Sensoreinrichtungen 22 und 24 sind die bei dem Verbiegen der Feder 12 um die zu der Längsachse 10 nicht-parallel ausgerichtete Drehachse, bzw. bei einem Verstellen des verstellbaren Elements um die Drehachse auf die zwei p-dotierten Piezos 34a ausgeübten mechanischen Spannungen nahezu gleich. Demgegenüber führt eine Torsion der Feder 12 um die Längsachse 10, bzw. ein Verstellen des verstellbaren Elements um die Längsachse 10 bei einer derartigen Anordnung der zwei p-dotierten Piezos 34a zu unterschiedlichen mechanischen Spannungen auf die zwei p-dotierten Piezos 34a der zwei Sensoreinrichtungen 22 und 24. In beiden Fällen umfassen die mechanischen Spannungen Störspannungen in die 110-Kristallrichtung.

Bevorzugterweise ist bei einer derartigen Anordnung der zwei p-dotierten Piezos 34a der zwei Sensoreinrichtungen 22 und 24 die (nicht dargestellte) Auswerteeinrichtung dazu ausgelegt, die erste Information bezüglich der ersten Verstell- und/oder Biegebewegung des verstellbaren Elements und/oder der Feder 12 um die Längsachse 10 unter Berücksichtigung einer Differenz des als erstes Sensorsignal bereitgestellten ersten Spannungssignals der ersten Sensoreinrichtung 22 und des als zweites Sensorsignal bereitgestellten zweiten Spannungssignals der zweiten Sensoreinrichtung 22 festzulegen. Zusätzlich kann die Auswerteeinrichtung dazu ausgelegt sein, die zweite Information bezüglich der zweiten Verstell- und/oder Biegebewegung des verstellbaren Elements und/oder der Feder 12 um die zu der Längsachse 10 nicht-parallele Drehachse unter Berücksichtigung eines Mittelwerts des ersten Spannungssignals und des zweiten Spannungssignals festzulegen. Auf diese Weise ist ein vergleichweise geringer Aufwand zum Festlegen einer verlässlichen ersten Information und einer verlässlichen zweiten Information gewährleistet.

In einer alternativen Vorrichtung kann die Feder 12 auch so ausgebildet sein, dass die Längsrichtung 10 der Feder 12 (in der Ausgangsstellung) entlang der 100-Kristallrichtung eines Federmaterials, vorzugsweise Silizium, ausgerichtet ist. Bevorzugterweise wird bei einer derartigen Ausbildung der Feder 12 für die zwei Sensoreinrichtungen 22 und 24 je ein x-ducer verwendet, welcher parallel zu der 100-Kristallrichtung, bzw. der Längsrichtung 10 der Feder 12 ausgerichtet ist. Weisen die zwei Sensoreinrichtungen 22 und 24 n-dotierte Widerstände auf, so sind diese vorzugsweise auf die in Fig. 4 dargestellte Weise ausgerichtet. Bei einer Verwendung von p-dotierten Widerständen für die zwei Sensoreinrichtungen 22 und 24 wird deren Ausrichtung vorteilhafterweise um 45° gedreht. Bei all den hier aufgezählten Vorrichtungen werden die piezo-resistiven Elemente der zwei Sensoreinrichtungen 22 und 24 in Bereichen der entlang der 100-Kristallrichtung ausgebildeten Feder 12 angeordnet, in welchen bei einer Biegung und/oder einer Torsion der Feder 12 eine maximale mechanische Spannung auftritt.

Fig. 5 zeigt eine Feder des mikromechanischen Bauteils nützlich zum Verständnis der Erfindung.

Bei der dargestellten Feder 12 ist als Ergänzung zu der Feder der Fig. 4 eine durchgehende Aussparung 62 innerhalb des ersten Endabschnitts 40 ausgebildet, welche den ersten Endabschnitt 40 in einen ersten Schenkel 64 und in einen zweiten Schenkel 66 unterteilt. Vorzugsweise bilden die beiden Schenkel 64 und 66 eine V-förmige Struktur.

Bevorzugterweise sind der p-dotierte Piezo 34a der ersten Sensoreinrichtung 22 auf oder in dem ersten Schenkel 64 und der p-dotierte Piezo 34a der zweiten Sensoreinrichtung 24 auf oder in dem zweiten Schenkel 66 angeordnet. Das Ausbilden der durchgehenden Aussparung 62 innerhalb des Endabschnitts 40 führt in diesem Fall zu einer Verstärkung der auf die zwei p-dotierten Piezos 34a der zwei Sensoreinrichtungen 22 und 24 wirkenden mechanischen Spannungen bei einem Verstellen des verstellbaren Elements um die Längsachse 10 und/oder um die zu der Längsachse 10 nicht-parallele weitere Drehachse. Somit sind die zwei p-dotierten Piezos 34a der zwei Sensoreinrichtungen 22 und 24 gezielt an Federabschnitten mit vergleichsweise hohen mechanischen Spannungen bei der Torsion der Feder 12 und/oder der Verbiegung der Feder 12 um die Drehachse angeordnet. Auf diese Weise ist eine genauere Festlegung der ersten Information und der zweiten Information möglich.

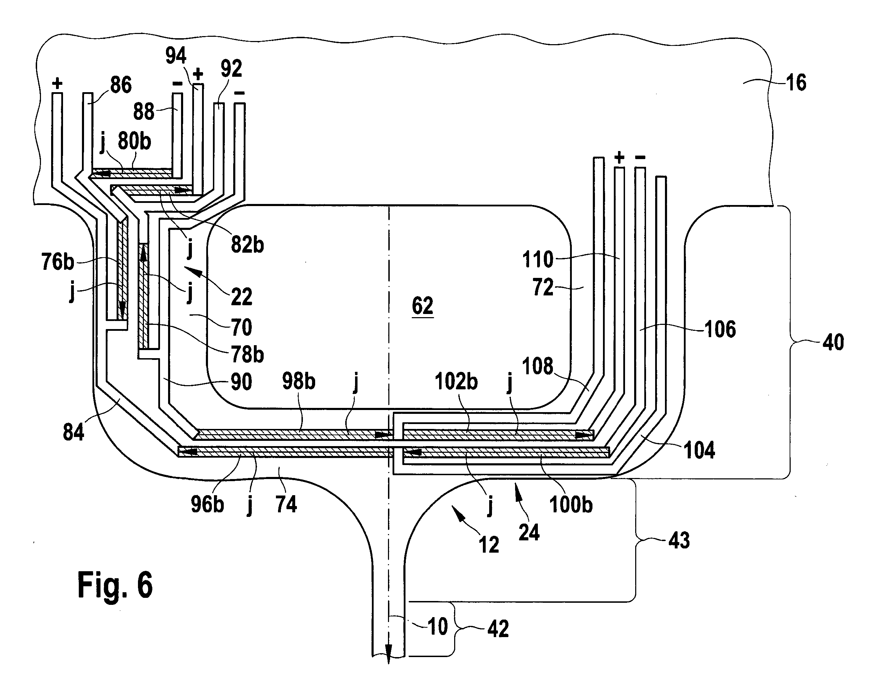

Fig. 6 zeigt eine Feder einer Ausführungsform des mikromechanischen Bauteils.

Die dargestellte Feder 12 ist so aus einem einkristallinen Silizium herausstrukturiert, dass die Längsachse 10 entlang der 110-Kristallrichtung des einkristallinen Siliziums ausgerichtet ist. Ein (nicht skizziertes) verstellbares Element ist über die Feder 12 mit der Halterung 16 verbunden. Vorzugsweise ist die Feder 12 einstückig mit zumindest einer Untereinheit der Halterung 16 und/oder einer Untereinheit des verstellbaren Elements ausgebildet.

Ein erster Endabschnitt 40 der Feder 12, welcher benachbart zu der Halterung 16 angeordnet ist, weist in Bezug einem zu dem verstellbaren Element ausgerichteten zweiten Endabschnitt 42 und/oder einem Zwischenabschnitt 43 eine Verbreiterung auf. Bei dem dargestellten Beispiel der Fig. 6 haben der zweite Endabschnitt 42 und der Zwischenabschnitt 43 eine mittlere Breite zwischen 10 bis 20 µm. Demgegenüber liegen die beiden Außenseitenflächen des ersten Endabschnitts 40 in einem Abstand zwischen 80 bis 150 µm zueinander.

In dem ersten Endabschnitt 40 ist eine (durchgehende) Aussparung 62 ausgebildet, welche den ersten Endabschnitt 40 in einen ersten Schenkel 70, einen zweiten Schenkel 72 und einen Verbindungssteg 74 unterteilt. Vorzugsweise verbindet der Verbindungssteg 74 den ersten Schenkel 70 so mit dem zweiten Schenkel 72, dass eine U-förmige Struktur gebildet wird. Insbesondere kann der erste Schenkel 70 parallel zu dem zweiten Schenkel 72 ausgerichtet sein.

Bei der dargestellten Feder 12 ist eine erste Sensoreinrichtung 22 zumindest teilweise auf dem ersten Schenkel 70 ausgebildet. Die erste Sensoreinrichtung 22 ist eine Wheatstonebrücke mit vier p-dotierten Widerständen 76b bis 82b. Ein erster p-dotierter Widerstand 76b und ein zweiter p-dotierter Widerstand 78b sind auf dem ersten Schenkel 70 angeordnet. Ein dritter p-dotierter Widerstand 80b und ein vierter p-dotierter Widerstand 82b sind vorzugsweise so an der Halterung 16 angeordnet, dass sie innerhalb oder nahe eines Ankerbereichs des ersten Schenkels 70 liegen.

Eine erste Stromversorgungsleitung 84 kontaktiert den ersten p-dotierten Widerstand 76b der ersten Sensoreinrichtung 22. Zusätzlich ist der erste p-dotierte Widerstand 76b über eine Messleitung 86 mit dem dritten p-dotierten Widerstand 80b der ersten Sensoreinrichtung 22 verbunden. An den dritten p-dotierten Widerstand 80b der ersten Sensoreinrichtung 22 ist auch eine zweite Stromversorgungsleitung 88 angeschlossen. Die erste Stromversorgungsleitung 84 und die zweite Stromversorgungsleitung 88 kontaktieren den ersten p-dotierten Widerstand 76b und den dritten p-dotierten Widerstand 80b der ersten Sensoreinrichtung 22 so, dass ein Strom j entlang der 110-Kristallrichtung, d. h. parallel oder senkrecht zu der Längsachse 10 der Feder 12, durch den ersten p-dotierten Widerstand 76b und den dritten p-dotierten Widerstand 80b der ersten Sensoreinrichtung 22 fließt.

Der zweite p-dotierte Widerstand 78b der ersten Sensoreinrichtung 22 ist mit einer dritten Stromversorgungsleitung 90 und mit einer zweiten Messleitung 92 verbunden. Die zweite Messleitung 92 verbindet den zweiten p-dotierten Widerstand 78b mit dem vierten p-dotieren Widerstand 82b der ersten Sensoreinrichtung 22, an welchen auch eine vierte Stromversorgungsleitung 94 angeschlossen ist. Die dritte Stromversorgungsleitung 90 und die vierte Stromversorgungsleitung 94 kontaktieren den zweiten p-dotierten Widerstand 78b oder den vierten p-dotierten Widerstand 82b der ersten Sensoreinrichtung 22 so, dass ein Strom j parallel oder senkrecht zu der Längsachse 10 der Feder 12 durch den zweiten p-dotierten Widerstand 78b und den vierten p-dotierten Widerstand 82b der ersten Sensoreinrichtung 22 fließt. Somit ist gewährleistet, dass der Strom j entlang der 110-Kristallrichtung des einkristallinen Siliziums geführt wird.

Beispielsweise ist die erste Stromversorgungsleitung 84 an einen Pluspol und die zweite Stromversorgungsleitung 88 an einen Minuspol einer Stromquelle angeschlossen. In diesem Fall ist es vorteilhaft, die dritte Stromversorgungsleitung 90 an den Minuspol und die vierte Stromversorgungsleitung 94 an den Pluspol der Stromquelle anzuschließen.

Die erste Messleitung 86 und die zweite Messleitung 92 sind dazu ausgelegt, Widerstände R, bzw. Widerstandsänderungen, als erstes Sensorsignal an den vier p-dotierten Widerständen 76b bis 82b der ersten Sensoreinrichtung 22 abzugreifen. Da die Funktionsweise einer Wheatstonebrücke mit vier p-dotierten Widerständen 76b bis 82b dem Fachmann bekannt ist, wird hier nicht genauer darauf eingegangen.

An der Feder 12 ist auch eine zweite Sensoreinrichtung 24 angeordnet, welche als Wheatstonebrücke mit vier p-dotierten Widerständen 96b bis 102b ausgebildet ist. Bevorzugterweise liegen die vier p-dotierten Widerstände 96b bis 102b der zweiten Sensoreinrichtung 24 zumindest teilweise auf dem Verbindungssteg 74. Insbesondere können ein erster p-dotierter Widerstand 96b und ein zweiter p-dotierter Widerstand 98b auf einer ersten Seite der Längsachse 10 liegen. In diesem Fall sind ein dritter p-dotierter Widerstand 100b und ein vierter p-dotierter Widerstand 102b bevorzugterweise auf der zweiten Seite der Längsachse 10 angeordnet.

Bei dem dargestellten Beispiel wird der erste p-dotierte Widerstand 96b der zweiten Sensoreinrichtung 24 von der ersten Stromversorgungsleitung 84 und einer dritten Messleitung 104 kontaktiert. Die dritte Messleitung 104 verbindet den ersten p-dotierten Widerstand 96b mit dem dritten p-dotierten Widerstand 100b der zweiten Sensoreinrichtung 24. An den dritten p-dotierten Widerstand 100b ist eine fünfte Stromversorgungsleitung 106 angeschlossen. Bevorzugterweise kontaktieren die erste Stromversorgungsleitung 84 und die fünfte Stromversorgungsleitung 106 den ersten p-dotierten Widerstand 96b oder den dritten p-dotierten Widerstand 100b so, dass ein Strom j senkrecht zu der Längsachse 10 durch die p-dotierten Widerstände 96b und 100b der zweiten Sensoreinrichtung 24 fließt. Der Strom j durch die p-dotierten Widerstände 96b und 100b ist in diesem Fall entlang der 110-Kristallrichtung des einkristallinen Siliziums der Feder 12 ausgerichtet. Sofern die erste Stromversorgungsleitung 84 an den Pluspol angeschlossen ist, ist die fünfte Stromversorgungsleitung 106 an einen Minuspol der Stromquelle angeschlossen.

Des Weitern kontaktiert die dritte Stromversorgungsleitung 90 den zweiten p-dotierten Widerstand 98b der zweiten Sensoreinrichtung 24, welcher zusätzlich an eine vierte Messleitung 108 angeschlossen ist. Die vierte Messleitung 108 verbindet den zweiten p-dotierten Widerstand 98b mit dem vierten p-dotierten Widerstand 102b der zweiten Sensoreinrichtung 24. Zusätzlich verläuft eine sechste Stromversorgungsleitung 110 von dem vierten p-dotierten Widerstand 102b der zweiten Sensoreinrichtung 24 zu der Stromquelle. Sofern die dritte Stromversorgungsleitung 90 den Minuspol kontaktiert, ist die sechste Stromversorgungsleitung 110 an einen Pluspol der Stromquelle angeschlossen.

Auch die dritte Stromversorgungsleitung 90 und die sechste Stromversorgungsleitung 110 können die ihnen zugeordneten p-dotierten Widerstände 98b und 102b der zweiten Sensoreinrichtung 24 so kontaktieren, dass der Strom j durch die p-dotierten Widerstände 98b und 102b entlang der 110-Kristallrichtung verläuft. Auf diese Weise ist ein vorteilhafter und verlässlicher Betrieb der als Wheatstonebrücke ausgebildeten zweiten Sensoreinrichtung 24 gewährleistet. Auch über die dritte Messleitung 104 und die vierte Messleitung 108 können Widerstände R/Widerstandsänderungen als zweites Sensorsignal an den p-dotierten Widerständen 96b bis 102b abgegriffen werden.

Wie der Fachmann anhand von Fig. 6 erkennt, bewirkt das Anordnen der beiden Sensoreinrichtungen 22 und 24 zumindest teilweise auf der gleichen Feder 12 den Vorteil, dass eine vergleichsweise kleine Anzahl von Stromversorgungsleitungen 84, 88, 90, 94, 106 und 110 zur Stromversorgung der p-dotierten Widerstände 76b bis 82b und 96b bis 102b notwendig ist. Auf diese Weise ist gewährleistet, dass die Biegesteifigkeit der Feder 12 und damit eine gute Verstellbarkeit des verstellbaren Elements durch die Stromversorgungsleitungen 84, 88, 90, 94, 106 und 110 kaum beeinflusst wird. Ebenso ist sichergestellt, dass eine Verbiegung der Feder 12, insbesondere des zweiten Endabschnitts 42 und/oder des Zwischenabschnitts 43, und/oder ein Verstellen des verstellbaren Elements kaum oder nur einen geringen Einfluss auf die Stromversorgungsleitungen 84, 88, 90, 94, 106 und 110, die evtl. auch piezo-resistiv reagieren, hat. Zusätzlich ist auf diese Weise der Arbeitsaufwand zum Bilden der Stromversorgungsleitungen 84, 88, 90, 94, 106 und 110 reduzierbar.

Nachfolgend wird beschrieben, wie die Informationen bezüglich einer Verstell- und/oder Biegebewegung der Feder 12 und/oder des verstellbaren Elements mit einem geringen Aufwand und verlässlich unter Berücksichtigung des ersten Sensorsignals der ersten Sensoreinrichtung 22 und des zweiten Sensorsignals der zweiten Sensoreinrichtung 24 festlegbar sind:

Aufgrund der durchgehenden Aussparung 62 in dem ersten Endabschnitt 40 führt ein Biegen der Feder 12 zu verstärkten mechanischen Spannungen an den beiden Schenkeln 70 und 72 und an den Verbindungssteg 74. Bei der Torsion der Feder 12 um die Längsachse 10 treten vergleichsweise hohe mechanische Spannungen in dem Verbindungssteg 74 auf, während die bewirkten mechanischen Spannungen in den beiden Schenkeln 70 und 72 relativ niedrig bleiben. Somit beeinflussen die bei der Torsion der Feder 12 um die Längsachse 10 auftretenden mechanischen Spannungen vor allem das zweite Sensorsignal der zweiten Sensoreinrichtung 24. Die (nicht skizzierte) Auswerteeinrichtung des mikromechanischen Bauteils ist deshalb vorteilhafterweise dazu ausgelegt, eine erste Information bezüglich der ersten Verstell- und/oder Biegebewegung (Torsion) der Feder 12 und/oder des verstellbaren Elements um die Längsachse 10 anhand des zweiten Sensorsignals festzulegen.

Bei einem Verstellen des verstellbaren Elements um die zu der Längsachse 10 nicht-parallele Drehachse und dem damit verbundenen Verbiegen der Feder 12 um die Drehachse werden die mechanischen Spannungen in den Schenkeln 70 und 72 gegenüber den mechanischen Spannungen in dem Verbindungssteg 74 verstärkt. Insbesondere wenn die Drehachse senkrecht zu der Längsachse 10 ausgerichtet ist, bewirkt das Verbiegen der Feder 12 um die Drehachse relativ hohe mechanische Spannungen in den Schenkeln 70 und 72, während die ausgelösten mechanischen Spannungen in dem Verbindungssteg 74 vergleichsweise niedrig bleiben.

Während die zweite Sensoreinrichtung 24 somit so an der Feder 12 angeordnet ist, dass die Torsion der Feder 12 um die Längsachse 10 über das zweite Sensorsignal gut festlegbar ist, ist durch die Anordnung der ersten Sensoreinrichtung 22 zumindest teilweise auf oder in dem ersten Schenkel 70 sichergestellt, dass die Torsion der Feder 12 um die Längsachse 10 zwar kaum mechanischen Spannungen auf die vier p-dotierten Widerstände 76b bis 82b bewirkt, das Verbiegen der Feder 12 um die Drehachse jedoch zu vergleichsweise hohen mechanischen Spannungen auf die vier p-dotierten Widerstände 76b bis 82b der ersten Sensoreinrichtung 22 führt. Deshalb ist die Auswerteeinrichtung vorzugsweise dazu ausgelegt, anhand des ersten Sensorsignals die zweite Information bezüglich der Verstell- und/oder Biegebewegung der Feder 12 und/oder des verstellbaren Elements um die Drehachse festzulegen.

In einer alternativen Ausbildung der Feder 12 kann die Längsachse 10 entlang der 100-Kristallrichtung ausgerichtet sein. Bevorzugterweise umfassen die Sensoreinrichtungen 22 und 24 in diesem Fall n-dotierte Widerstände mit der in Fig. 6 dargestellten Anordnung und Ausrichtung. Sofern jeweils vier p-dotierte Widerstände 76b bis 82b und 96b bis 102b für die Sensoreinrichtungen 22 und 24, sind die Ausrichtungen der p-dotierten Widerstände 76b bis 82b und 96b bis 102b entsprechend angepasst.

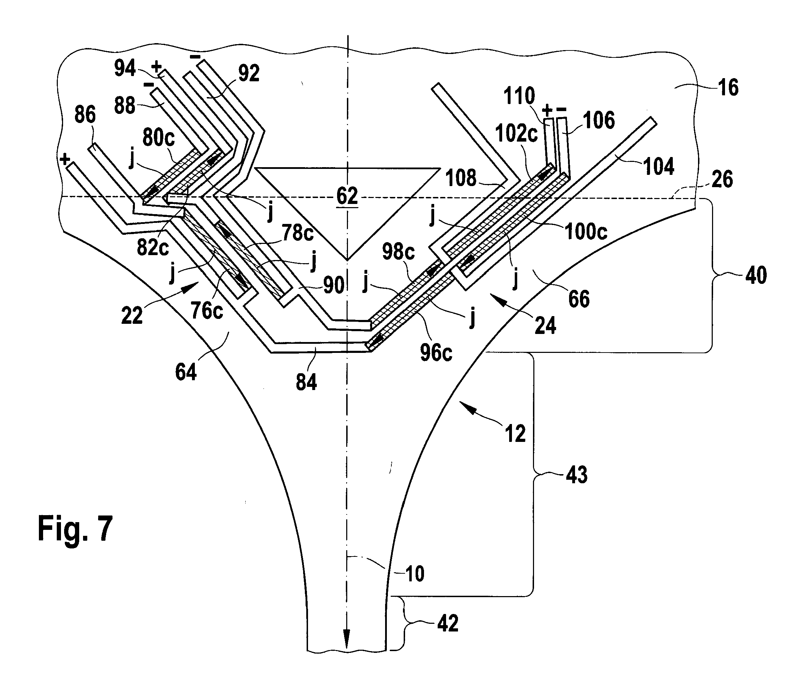

Fig. 7 zeigt eine Feder des mikromechanischen Bauteils nützlich zum Verständnis der Erfindung.

Die dargestellte Feder 12 ist so aus einem einkristallinen Silizium herausstrukturiert, dass die Längsachse 10 der Feder 12 entlang der 110-Kristallrichtung verläuft. Ein erster Endabschnitt 40 der Feder 12, welcher benachbart zu der Halterung 16 ausgebildet ist, weist eine Mindestbreite auf, welche größer als eine Mindestbreite eines zu dem verstellbaren Element ausgerichteten zweiten Endabschnitts 42 und/oder eines Zwischenabschnitts 43 der Feder 12 ist. Beispielsweise haben der zweite Endabschnitt 42 und/oder der Zwischenabschnitt 43 eine mittlere Breite zwischen 10 bis 20 µm. Demgegenüber kann die Breite des ersten Endabschnitts 40 mit zunehmendem Abstand von der Halterung 16 stetig abnehmen, wobei die Breite insbesondere in einem Bereich zwischen 50 bis 150 µm liegt.

In dem ersten Endabschnitt 40 ist eine durchgehende Aussparung 62 ausgebildet, welche den ersten Endabschnitt 40 in einem ersten Schenkel 64 und in einem zweiten Schenkel 66 unterteilt. Vorzugsweise bilden die beiden Schenkel 64 und 66 eine V-förmige Struktur.

Auf der dargestellten Feder 12 sind zumindest teilweise eine erste Sensoreinrichtung 22, eine zweite Sensoreinrichtung 24, die Stromversorgungsleitungen 84, 88, 90, 94, 106 und 110 und die Messleitungen 86, 92, 104 und 108 ausgebildet. Im Gegensatz zu der vorherigen Ausführungsform sind die Sensoreinrichtungen 22 und 24 jedoch als Wheatstonebrücken mit je vier n-dotierten Widerstände 76c bis 82c oder 96c bis 102c ausgebildet.

Die Stromversorgungsleitungen 84, 88, 90, 94, 106 und 110 kontaktieren die ihnen zugeordneten Widerstände 76c bis 82c und 96c bis 102c so, dass ein Strom j durch jeden der Widerstände 76c bis 82c und 96c bis 102c in einem Winkel von 45° zu der entlang der 110-Kristallrichtung ausgerichteten Längsachse 10 der Feder 12 verläuft. Die Ausrichtung des Stroms j durch die Widerstände 76c bis 82c und 96c bis 102c entspricht somit der vorteilhaften Ausrichtung der Fig. 3C. Entsprechend sind auch die Messleitungen 86, 92, 104 und 108 so ausgebildet, dass das Messen eines Widerstands R/ einer Widerstandsänderung in einem Winkel von 45° zu der Längsachse 10, bzw. zu der 110-Kristallrichtung erfolgt. Die Stromversorgungsleitungen 84, 88, 90, 94, 106 und 110 und die Messleitungen 86, 92, 104 und 108 erfüllen die oben schon beschriebenen Funktionen. Auf eine weitere Beschreibung der Funktionen der Stromversorgungsleitungen 84, 88, 90, 94, 106 und 110 und der Messleitungen 86, 92, 104 und 108 wird deshalb hier verzichtet.

Durch die V-förmige Struktur des ersten Endabschnitts 40 ist gewährleistet, dass genügend Anbringfläche zum Anbringen der n-dotierten Widerstände 76c bis 82c auf dem ersten Schenkel 64 und der n-dotierten Widerstände 96c bis 102c auf dem zweiten Schenkel 66 gemäß der bevorzugten Ausrichtung der n-dotierten Widerstände 76c bis 82c und 96c bis 102c entlang der 100-Kristallrichtung zur Verfügung steht. Des Weiteren ist eine ausreichend große Anbringfläche zum Bilden der Stromversorgungsleitungen 84, 88, 90, 94, 106 und 110 und der Messleitungen 86, 92, 104 und 108 gewährleistet.

Bei der Torsion der Feder 12 um die Längsachse 10 weichen die auf die n-dotierten Widerstände 76c bis 82c wirkenden mechanischen Spannungen deutlich von den auf die n-dotierten Widerstände 96c bis 102c ausgeübten mechanischen Spannungen ab. Aus diesem Grund ist eine Differenz zwischen dem ersten Sensorsignal und dem zweiten Sensorsignal zum Festlegen der ersten Information bezüglich der ersten Verstell- und/oder Biegebewegung der Feder 12 und/oder des verstellbaren Elements um die Längsachse 10 besonders geeignet. Demgegenüber bewirkt das Verbiegen der Feder 12 um die Drehachse nahezu gleiche mechanische Spannungen auf die n-dotierten Widerstände 76c bis 82c und 96c bis 102c.

Bevorzugterweise ist die Auswerteeinrichtung deshalb dazu ausgelegt, die erste Information unter Berücksichtigung einer Differenz des ersten Sensorsignals von dem zweiten Sensorsignal festzulegen und die zweite Information unter Berücksichtigung eines Mittelwerts aus dem ersten Sensorsignal und dem zweiten Sensorsignal zu bestimmen.

In einer alternativen Vorrichtung kann die Längsachse 10 der Feder 12 mit den Untereinheiten 70 bis 74 entlang der 100-Kristallrichtung einer Siliziummaterialschicht, aus welcher die Feder 12 herausstrukturiert ist, ausgerichtet sein. In diesem Fall sind die p-dotierten Widerstände von mindestens einer der Sensoreinrichtungen 22 und 24 entsprechend der Fig. 7 zu der Längsachse 10 ausgerichtet. Sofern mindestens eine der Sensoreinrichtungen 22 und 24 n-dotierte Widerstände 76c bis 82c und 96c bis 102c umfasst, sind diese gegenüber der in Fig. 7 dargestellten Ausrichtung um 45° gedreht angeordnet. In beiden Fällen können die Sensoreinrichtungen 22 und 24 in Gebieten maximaler mechanischer Spannungen angeordnet werden.

Die mittels einer der oben beschriebenen Ausführungsformen festgelegten Informationen bezüglich der Verstell- und/oder Biegebewegungen der Feder 12 und/oder des verstellbaren Elements können zum Ansteuern und/oder Überprüfen eines Antriebs des mikromechanischen Bauteils verwendet werden. Für eine geregelte Ansteuerung des Antriebs des mikromechanischen Bauteils ist eine genaue Detektion der aktuellen Stellung des verstellbaren Elements vorteilhaft. Als Alternative oder als Ergänzung dazu können die von der Auswerteeinrichtung festgelegten Informationen auch genutzt werden, um zu überprüfen, ob das verstellbare Element verlässlich in eine bevorzugte Stellung gebracht wurde. Durch ein Auswerten der von der Auswerteeinrichtung bereitgestellten Informationen ist somit eine verbesserte Genauigkeit beim Verstellen des verstellbaren Elements in die bevorzugte Stellung realisierbar.

Bei einem als Sensor ausgebildeten mikromechanischen Bauteil können die von der Auswerteeinrichtung bereitgestellten Informationen auch zum Ermitteln/Festlegen einer Sensorinformation bezüglich einer auf das verstellbare Element wirkenden externen Kraft verwendet werden. Das hier beschriebene mikromechanische Bauteil ist somit sowohl als Aktor als auch als Sensor verwendbar.

Anhand der vorhergehenden Ausführungsformen sind für den Fachmann auch Ausbildungen der Sensoreinrichtungen 22 und/oder 24 nahegelegt, bei welchen anstelle der Wheatstonebrücken Einzelwiderstände und/oder Halbbrücken verwendet werden. Ebenso sind anhand der Figuren für den Fachmann Ausführungsformen mit mindestens einem auf oder in einem Verankerungsbereich der Feder angeordneten piezo-resistiven Sensorelement nahegelegt. Es wird deshalb nicht weiter auf derartige Ausbildungen und Anordnungsmöglichkeiten der Sensoreinrichtungen 22 und/oder 24 eingegangen.

Wie der Fachmann ebenfalls erkennt, können die Sensoreinrichtungen 22 und/oder 24 auch unterschiedliche piezo-resistive Sensorelemente umfassen. Derartige Kombinationen der vorhergehenden Ausführungsformen werden darum hier nicht beschrieben.

## Patentansprüche

1. Mikromechanisches Bauteil, mit:
einer Halterung (16);
einem verstellbaren Element (14), welches zumindest über eine Feder (12) mit der Halterung (16) verbunden ist;
einer ersten Sensoreinrichtung (22) mit mindestens einem ersten piezo-resistiven Sensorelement (34a, 34b, 34c, 76b bis 82b, 76c bis 82c), wobei die erste Sensoreinrichtung (22) dazu ausgelegt ist, ein erstes Sensorsignal (U, R) bezüglich einer auf das mindestens eine erste piezo-resistive Sensorelement (34a, 34b, 34c, 76b bis 82b, 76c bis 82c) wirkenden ersten mechanischen Spannung bereitzustellen, und wobei das erste piezo-resistive Sensorelement (34a, 34b, 34c, 76b bis 82b, 76c bis 82c) auf oder in der Feder (12), auf oder in einem zu der Halterung (16) benachbarten ersten Verankerungsbereich der Feder (12) und/oder auf oder in einem zu dem verstellbaren Element (14) benachbarten zweiten Verankerungsbereich der Feder (12) angeordnet ist; und
einer zweiten Sensoreinrichtung (24) mit mindestens einem zweiten piezo-resistiven Sensorelement (34a, 34b, 34c, 96b bis 102b, 96c bis 102c), wobei die zweite Sensoreinrichtung (24) dazu ausgelegt ist, ein zweites Sensorsignal (U, R) bezüglich einer auf das mindestens eine zweite piezo-resistive Sensorelement (34a, 34b, 34c, 96b bis 102b, 96c bis 102c) wirkenden zweiten mechanischen Spannung bereitzustellen, und wobei das zweite piezo-resistive Sensorelement (34a, 34b, 34c, 96b bis 102b, 96c bis 102c) auf oder in der Feder (12), auf oder in dem ersten Verankerungsbereich der Feder (12) und/oder auf oder in dem zweiten Verankerungsbereich der Feder (12) angeordnet ist,
**dadurch gekennzeichnet, dass**
die Feder (12) so ausgebildet ist, dass ein mit der Halterung (16) verbundener erster Endabschnitt (40) der Feder (12) eine durchgehende Aussparung (62) aufweist, welche den ersten Endabschnitt (40) zumindest in einen ersten Schenkel (64, 70) und in einen zweiten Schenkel (66, 72) unterteilt, das erste piezo-resistive Sensorelement (34a, 76b bis 82b, 76c bis 82c) und das zweite piezo-resistive Sensorelement (34a, 96b bis 102b, 96c bis 102c) auf oder in dem ersten Endabschnitt angeordnet sind, und die durchgehende Aussparung (62) den ersten Endabschnitt (40) in den ersten Schenkel (70), den zweiten Schenkel (72) und einen den ersten Schenkel (70) mit dem zweiten Schenkel (72) verbindenden Verbindungssteg (74) unterteilt, wobei der erste Schenkel (70), der zweite Schenkel (72) und der Verbindungssteg (74) eine U-förmige Struktur bilden, und wobei das erste piezo-resistives Sensorelement (76b bis 82b) zumindest teilweise auf oder in dem ersten Schenkel (70) und das zweite piezo-resistive Sensorelement (96b bis 102b) zumindest teilweise auf oder in dem Verbindungssteg (74) angeordnet ist.

2. Mikromechanisches Bauteil nach Anspruch 1, wobei das erste piezo-resistive Sensorelement (34a, 34b, 34c, 76b bis 82b, 76c bis 82c) und/oder zweite piezo-resistive Sensorelement (34a, 34b, 34c, 96b bis 102b, 96c bis 102c) auf oder in der Feder (12) angeordnet sind.

3. Mikromechanisches Bauteil nach Anspruch 1 oder 2, wobei das mikromechanische Bauteil eine Auswerteeinrichtung umfasst, welche dazu ausgelegt ist, unter Berücksichtigung des bereitgestellten ersten Sensorsignals (U, R) und des bereitgestellten zweiten Sensorsignals (U, R) eine erste Information bezüglich einer ersten Verstell- und/oder Biegebewegung des verstellbaren Elements (14) und/oder der Feder (12) um eine entlang einer Längsachse (10) der Feder (12) ausgerichtete erste Drehachse und eine zweite Information bezüglich einer zweiten Verstell- und/oder Biegebewegung des verstellbaren Elements (14) und/oder der Feder (12) um eine zu der ersten Drehachse nicht-parallele zweite Drehachse festzulegen.

4. Mikromechanisches Bauteil nach Anspruch 3, wobei die Auswerteeinrichtung zusätzlich dazu ausgelegt ist, die erste Information unter Berücksichtigung einer Differenz des bereitgestellten ersten Sensorsignals (U, R) und des bereitgestellten zweiten Sensorsignals (U, R) festzulegen und die zweite Information unter Berücksichtigung eines Mittelwerts des bereitgestellten ersten Sensorsignals (U, R) und des bereitgestellten zweiten Sensorsignals (U, R) festzulegen.

5. Mikromechanisches Bauteil nach einem der vorhergehenden Ansprüche, wobei die erste Sensoreinrichtung (22) und/oder die zweite Sensoreinrichtung (24) eine Wheatstonebrücke mit einem p-dotierten Widerstand (34b, 76b bis 82b, 96b bis 102b) als zugehöriges erstes und/oder zweites piezo-resistives Sensorelement (34b, 76b bis 82b, 96b bis 102b), eine Wheatstonebrücke mit einem n-dotierten Widerstand (34c, 76c bis 82c, 96c bis 102c) als zugehöriges erstes und/oder zweites piezo-resistives Sensorelement (34c, 76c bis 82c, 96c bis 102c), ein x-ducer mit einem p-dotierten Piezo (34a) als zugehöriges erstes und/oder zweites piezo-resistives Sensorelement (34a) und/oder ein x-ducer mit einem n-dotierten Piezo als zugehöriges erstes und/oder zweites piezo-resistives Sensorelement sind.

6. Mikromechanisches Bauteil nach einem der vorhergehenden Ansprüche, wobei die Feder (12) aus einem einkristallinen Siliziummaterial herausstrukturiert ist, und wobei die Längsrichtung (10) der Feder (12) entlang der 110-Kristallrichtung oder entlang der 100-Kristallrichtung des einkristallinen Siliziummaterials ausgerichtet ist.

7. Mikromechanisches Bauteil nach Anspruch 3, wobei die Auswerteeinrichtung zusätzlich dazu ausgelegt ist, die erste Information unter Berücksichtigung des bereitgestellten zweiten Sensorsignals (U, R) und die zweite Information unter Berücksichtigung des bereitgestellten ersten Sensorsignals (U, R) festzulegen.

8. Herstellungsverfahren für ein mikromechanisches Bauteil mit den Schritten:
Verbinden eines verstellbaren Elements (14) mit einer Halterung (16) zumindest über eine Feder (12);
Bilden einer ersten Sensoreinrichtung (22) mit mindestens einem ersten piezo-resistiven Sensorelement (34a, 34b, 34c, 76b bis 82b, 76c bis 82c), wobei die erste Sensoreinrichtung (22) dazu ausgelegt wird, ein erstes Sensorsignal (U, R) bezüglich einer auf das mindestens eine erste piezo-resistive Sensorelement (34a, 34b, 34c, 76b bis 82b, 76c bis 82c) wirkenden ersten mechanischen Spannung bereitzustellen, und wobei das erste piezo-resistive Sensorelement (34a, 34b, 34c, 76b bis 82b, 76c bis 82c) auf oder in der Feder (12), auf oder in einem zu der Halterung (16) benachbarten ersten Verankerungsbereich der Feder (12) und/oder auf oder in einem zu dem verstellbaren Element (14) benachbarten zweiten Verankerungsbereich der Feder (12) angeordnet wird; und
Bilden einer zweiten Sensoreinrichtung (24) mit mindestens einem zweiten piezo-resistiven Sensorelement (34a, 34b, 34c, 96b bis 102b, 96c bis 102c), wobei die zweite Sensoreinrichtung (24) dazu ausgelegt wird, ein zweites Sensorsignal (U, R) bezüglich einer auf das mindestens eine zweite piezo-resistive Sensorelement (34a, 34b, 34c, 96b bis 102b, 96c bis 102c) wirkenden zweiten mechanischen Spannung bereitzustellen, und wobei das zweite piezo-resistive Sensorelement (34a, 34b, 34c, 96b bis 102b, 96c bis 102c) auf oder in der Feder (12), auf oder in dem ersten Verankerungsbereich der Feder (12) und/oder auf oder in dem zweiten Verankerungsbereich der Feder (12) angeordnet wird,
**dadurch gekennzeichnet, dass**
die Feder (12) so ausgebildet wird, dass ein mit der Halterung (16) verbundener erster Endabschnitt (40) der Feder (12) eine durchgehende Aussparung (62) aufweist, welche den ersten Endabschnitt (40) zumindest in einen ersten Schenkel (64, 70) und in einen zweiten Schenkel (66, 72) unterteilt, das erste piezo-resistive Sensorelement (34a, 76b bis 82b, 76c bis 82c) und das zweite piezo-resistive Sensorelement (34a, 96b bis 102b, 96c bis 102c) auf oder in dem ersten Endabschnitt angeordnet sind, und die durchgehende Aussparung (62) den ersten Endabschnitt (40) in den ersten Schenkel (70), den zweiten Schenkel (72) und einen den ersten Schenkel (70) mit dem zweiten Schenkel (72) verbindenden Verbindungssteg (74) unterteilt, wobei der erste Schenkel (70), der zweite Schenkel (72) und der Verbindungssteg (74) eine U-förmige Struktur bilden, und wobei das erste piezo-resistives Sensorelement (76b bis 82b) zumindest teilweise auf oder in dem ersten Schenkel (70) und das zweite piezo-resistive Sensorelement (96b bis 102b) zumindest teilweise auf oder in dem Verbindungssteg (74) angeordnet ist.

## Claims

1. Micromechanical component, having:
a holding means (16);
an adjustable element (14) which is connected to the holding means (16) at least by means of a spring (12);
a first sensor device (22) having at least one first piezoresistive sensor element (34a, 34b, 34c, 76b to 82b, 76c to 82c), wherein the first sensor device (22) is designed to provide a first sensor signal (U, R) in respect of a first mechanical stress which acts on the at least one first piezoresistive sensor element (34a, 34b, 34c, 76b to 82b, 76c to 82c), and wherein the first piezoresistive sensor element (34a, 34b, 34c, 76b to 82b, 76c to 82c) is arranged on or in the spring (12), on or in a first anchoring region of the spring (12), which first anchoring region is adjacent to the holding means (16), and/or on or in a second anchoring region of the spring (12), which second anchoring region is adjacent to the adjustable element (14); and
a second sensor device (24) having at least one second piezoresistive sensor element (34a, 34b, 34c, 96b to 102b, 96c to 102c), wherein the second sensor device (24) is designed to provide a second sensor signal (U, R) in respect of a second mechanical stress which acts on the at least one second piezoresistive sensor element (34a, 34b, 34c, 96b to 102b, 96c to 102c), and wherein the second piezoresistive sensor element (34a, 34b, 34c, 96b to 102b, 96c to 102c) is arranged on or in the spring (12), on or in the first anchoring region of the spring (12) and/or on or in the second anchoring region of the spring (12),
**characterized in that**
the spring (12) is designed such that a first end section (40) of the spring (12), which first end section is connected to the holding means (16), has a continuous cutout (62) which divides the first end section (40) at least into a first limb (64, 70) and into a second limb (66, 72), the first piezoresistive sensor element (34a, 76b to 82b, 76c to 82c) and the second piezoresistive sensor element (34a, 96b to 102b, 96c to 102c) are arranged on or in the first end section, and the continuous cutout (62) divides the first end section (40) into the first limb (70), the second limb (72) and a connecting web (74) which connects the first limb (70) to the second limb (72), wherein the first limb (70), the second limb (72) and the connecting web (74) form a U-shaped structure, and wherein the first piezoresistive sensor element (76b to 82b) is arranged at least partially on or in the first limb (70) and the second piezoresistive sensor element (96b to 102b) is arranged at least partially on or in the connecting web (74).

2. Micromechanical component according to Claim 1, wherein the first piezoresistive sensor element (34a, 34b, 34c, 76b to 82b, 76c to 82c) and/or the second piezoresistive sensor element (34a, 34b, 34c, 96b to 102b, 96c to 102c) are arranged on or in the spring (12).

3. Micromechanical component according to Claim 1 or 2, wherein the micromechanical component comprises an evaluation device which is designed to define a first item of information in respect of a first adjustment and/or bending movement of the adjustable element (14) and/or of the spring (12) about a first rotation axis which is oriented along a longitudinal axis (10) of the spring (12), and a second item of information in respect of a second adjustment and/or bending movement of the adjustable element (14) and/or of the spring (12) about a second rotation axis which is not parallel to the first rotation axis, taking into account the provided first sensor signal (U, R) and the provided second sensor signal (U, R).

4. Micromechanical component according to Claim 3, wherein the evaluation device is additionally designed to define the first item of information taking into account a difference between the provided first sensor signal (U, R) and the provided second sensor signal (U, R), and to define the second item of information taking into account an average value of the provided first sensor signal (U, R) and the provided second sensor signal (U, R).

5. Micromechanical component according to one of the preceding claims, wherein the first sensor device (22) and/or the second sensor device (24) are/is a Wheatstone bridge with a p-doped resistor (34b, 76b to 82b, 96b to 102b) as the associated first and/or second piezoresistive sensor element (34b, 76b to 82b, 96b to 102b), a Wheatstone bridge with an n-doped resistor (34c, 76c to 82c, 96c to 102c) as the associated first and/or second piezoresistive sensor element (34c, 76c to 82c, 96c to 102c), a transducer with a p-doped piezo (34a) as the associated first and/or second piezoresistive sensor element (34a) and/or a transducer with an n-doped piezo as the associated first and/or second piezoresistive sensor element.

6. Micromechanical component according to one of the preceding claims, wherein the spring (12) is structured from a monocrystalline silicon material, and wherein the longitudinal direction (10) of the spring (12) is oriented along crystal direction 110 or along crystal direction 100 of the monocrystalline silicon material.

7. Micromechanical component according to Claim 3, wherein the evaluation device is additionally designed to define the first item of information taking into account the provided second sensor signal (U, R) and the second item of information taking into account the provided first sensor signal (U, R).

8. Production method for a micromechanical component, comprising the steps of:
connecting an adjustable element (14) to a holding means (16) at least by means of a spring (12);
forming a first sensor device (22) having at least one first piezoresistive sensor element (34a, 34b, 34c, 76b to 82b, 76c to 82c), wherein the first sensor device (22) is designed to provide a first sensor signal (U, R) in respect of a first mechanical stress which acts on the at least one first piezoresistive sensor element (34a, 34b, 34c, 76b to 82b, 76c to 82c), and wherein the first piezoresistive sensor element (34a, 34b, 34c, 76b to 82b, 76c to 82c) is arranged on or in the spring (12), on or in a first anchoring region of the spring (12), which first anchoring region is adjacent to the holding means (16), and/or on or in a second anchoring region of the spring (12), which second anchoring region is adjacent to the adjustable element (14); and
forming a second sensor device (24) having at least one second piezoresistive sensor element (34a, 34b, 34c, 96b to 102b, 96c to 102c), wherein the second sensor device (24) is designed to provide a second sensor signal (U, R) in respect of a second mechanical stress which acts on the at least one second piezoresistive sensor element (34a, 34b, 34c, 96b to 102b, 96c to 102c), and wherein the second piezoresistive sensor element (34a, 34b, 34c, 96b to 102b, 96c to 102c) is arranged on or in the spring (12), on or in the first anchoring region of the spring (12) and/or on or in the second anchoring region of the spring (12),
**characterized in that**
the spring (12) is designed such that a first end section (40) of the spring (12), which first end section is connected to the holding means (16), has a continuous cutout (62) which divides the first end section (40) at least into a first limb (64, 70) and into a second limb (66, 72), the first piezoresistive sensor element (34a, 76b to 82b, 76c to 82c) and the second piezoresistive sensor element (34a, 96b to 102b, 96c to 102c) are arranged on or in the first end section, and the continuous cutout (62) divides the first end section (40) into the first limb (70), the second limb (72) and a connecting web (74) which connects the first limb (70) to the second limb (72), wherein the first limb (70), the second limb (72) and the connecting web (74) form a U-shaped structure, and wherein the first piezoresistive sensor element (76b to 82b) is arranged at least partially on or in the first limb (70) and the second piezoresistive sensor element (96b to 102b) is arranged at least partially on or in the connecting web (74).

## Revendications

1. Composant micromécanique présentant :
un support (16),
un élément mobile (14) relié au support (16) par au moins un ressort (12),
un premier dispositif de détection (22) qui présente au moins un premier élément piézorésistif de détection (34a, 34b, 34c, 76b à 82b, 76c à 82c), le premier dispositif de détection (22) étant conçu pour délivrer un premier signal de détection (U, R) concernant une première contrainte mécanique qui agit sur le ou les premiers éléments piézorésistifs de détection (34a, 34b, 34c, 76b à 82b, 76c à 82c),
le premier élément piézorésistif de détection (34a, 34b, 34c, 76b à 82b, 76c à 82c) étant disposé sur ou dans le ressort (12), sur ou dans une première partie d'ancrage du ressort (12) voisine du support (16) et/ou sur ou dans une deuxième partie d'ancrage du ressort (12) voisine de l'élément mobile (14) et
un deuxième dispositif de détection (24) qui présente au moins un deuxième élément piézorésistif de détection (34a, 34b, 34c, 96b à 102b, 96c à 102c), le deuxième dispositif de détection (24) étant conçu pour délivrer un deuxième signal de détection (U, R) concernant une deuxième contrainte mécanique qui agit sur le ou les deuxièmes éléments piézorésistifs de détection (34a, 34b, 34c, 96b à 102b, 96c à 102c),
le deuxième élément piézorésistif de détection (34a, 34b, 34c, 96b à 102b, 96c à 102c) étant disposé sur ou dans le ressort (12), sur ou dans la première partie d'ancrage du ressort (12) et/ou sur ou dans la deuxième partie d'ancrage du ressort (12),
**caractérisé en ce que**
le ressort (12) est configuré de telle sorte qu'une première partie d'extrémité (40) du ressort (12) reliée au support (16) est traversée par une découpe (62) qui divise la première partie d'extrémité (40) en au moins une première branche (64, 70) et une deuxième branche (66, 72),
**en ce que** le premier élément piézorésistif de détection (34a, 76b à 82b, 76c à 82c) et le deuxième élément piézorésistif de détection (34a, 96b à 102b, 96c à 102c) sont disposés sur ou dans la première partie d'extrémité,
**en ce que** la découpe (62) qui traverse la première partie d'extrémité (40) la divise en la première branche (70), la deuxième branche (72) et une traverse de liaison (74) qui relie la première branche (70) à la deuxième branche (72),
**en ce que** la première branche (70), la deuxième branche (72) et la traverse de liaison (74) forment une structure en forme de U et
**en ce que** le premier élément piézorésistif de détection (76b à 82b) est disposé au moins en partie sur ou dans la première branche (70) et le deuxième élément piézorésistif de détection (96b à 102b) est disposé au moins en partie sur ou dans la traverse de liaison (74).

2. Composant micromécanique selon la revendication 1, dans lequel le premier élément piézorésistif de détection (34a, 34b, 34c, 76b à 82b, 76c à 82c) et/ou le deuxième élément piézorésistif de détection (34a, 34b, 34c, 96b à 102b, 96c à 102c) sont disposés sur ou dans le ressort (12).

3. Composant micromécanique selon les revendications 1 ou 2, dans lequel le composant micromécanique comporte un dispositif d'évaluation conçu pour définir une première information qui concerne un premier mouvement de déplacement et/ou de flexion de l'élément mobile (14) et/ou du ressort (12) autour d'un premier axe de rotation orienté suivant l'axe longitudinal (10) du ressort (12) et une deuxième information qui concerne un deuxième mouvement de déplacement et/ou de flexion de l'élément mobile (14) et/ou du ressort (12) autour d'un deuxième axe de rotation non parallèle au premier axe de rotation en tenant compte du premier signal de détection (U, R) et du deuxième signal de détection (U, R) qui sont délivrés.

4. Composant micromécanique selon la revendication 3, dans lequel le dispositif d'évaluation est de plus conçu pour définir la première information en tenant compte de la différence entre le premier signal de détection (U, R) et le deuxième signal de détection (U, R) qui ont été délivrés et pour définir la deuxième information en tenant compte de la valeur moyenne du premier signal de détection (U, R) et du deuxième signal de détection (U, R) qui ont été délivrés.

5. Composant micromécanique selon l'une des revendications précédentes, dans lequel le premier dispositif de détection (22) et/ou le deuxième dispositif de détection (24) forment un pont de Wheatstone qui présente une résistance (34b, 76b à 82b, 96b à 102b) à dopage p comme premier et/ou deuxième élément piézorésistif de détection (34b, 76b à 82b, 96b à 102b) associés, un pont de Wheatstone présentant une résistance (34c, 76c à 82c, 96c à 102c) à dopage p comme premier et/ou deuxième élément piézorésistif de détection (34c, 76c à 82c, 96c à 102c) associés, un transducteur à élément piézoélectrique (34a) à dopage p comme premier et/ou deuxième élément piézorésistif de détection (34a) associés et/ou un transducteur à élément piézoélectrique à dopage n comme premier et/ou deuxième élément piézorésistif de détection associés.

6. Composant micromécanique selon l'une des revendications précédentes, dans lequel le ressort (12) est structuré à partir d'un matériau monocristallin de silicium et dans lequel la direction longitudinale (10) du ressort (12) est orientée suivant la direction cristalline 110 ou la direction cristalline 100 du matériau de silicium monocristallin.

7. Composant micromécanique selon la revendication 3, dans lequel le dispositif d'évaluation est de plus conçu pour définir la première information en tenant compte du deuxième signal de détection (U, R) qui a été délivré et la deuxième information en tenant compte du premier signal de détection (U, R) qui a été délivré.

8. Procédé de fabrication d'un composant micromécanique, le procédé comportant les étapes qui consistent à :
relier un premier élément mobile (14) à un support (16) par au moins un ressort (12),
former un premier dispositif de détection (22) qui présente au moins un premier élément piézorésistif de détection (34a, 34b, 34c, 76b à 82b, 76c à 82c), le premier dispositif de détection (22) étant conçu pour délivrer un premier signal de détection (U, R) concernant une première contrainte mécanique qui agit sur le ou les premiers éléments piézorésistifs de détection (34a, 34b, 34c, 76b à 82b, 76c à 82c), le premier élément piézorésistif de détection (34a, 34b, 34c, 76b à 82b, 76c à 82c) étant disposé sur ou dans le ressort (12), sur ou dans une première partie d'ancrage du ressort (12) voisine du support (16) et/ou sur ou dans une deuxième partie d'ancrage du ressort (12) voisine de l'élément mobile (14) et
former un deuxième dispositif de détection (24) qui présente au moins un deuxième élément piézorésistif de détection (34a, 34b, 34c, 96b à 102b, 96c à 102c), le deuxième dispositif de détection (24) étant conçu pour délivrer un deuxième signal de détection (U, R) concernant une deuxième contrainte mécanique qui agit sur le ou les deuxièmes éléments piézorésistifs de détection (34a, 34b, 34c, 96b à 102b, 96c à 102c), le deuxième élément piézorésistif de détection (34a, 34b, 34c, 96b à 102b, 96c à 102c) étant disposé sur ou dans le ressort (12), sur ou dans la première partie d'ancrage du ressort (12) et/ou sur ou dans la deuxième partie d'ancrage du ressort (12),
**caractérisé en ce que**
le ressort (12) est configuré de telle sorte qu'une première partie d'extrémité (40) du ressort (12) reliée au support (16) est traversée par une découpe (62) qui divise la première partie d'extrémité (40) en au moins une première branche (64, 70) et une deuxième branche (66, 72),
**en ce que** le premier élément piézorésistif de détection (34a, 76b à 82b, 76c à 82c) et le deuxième élément piézorésistif de détection (34a, 96b à 102b, 96c à 102c) sont disposés sur ou dans la première partie d'extrémité,
**en ce que** la découpe (62) qui traverse la première partie d'extrémité (40) la divise en la première branche (70), la deuxième branche (72) et une traverse de liaison (74) qui relie la première branche (70) à la deuxième branche (72),
**en ce que** la première branche (70), la deuxième branche (72) et la traverse de liaison (74) forment une structure en forme de U et
erl ce que le premier élément piézorésistif de détection (76b à 82b) est disposé au moins en partie sur ou dans la première branche (70) et le deuxième élément piézorésistif de détection (96b à 102b) est disposé au moins en partie sur ou dans la traverse de liaison (74).
